(19) **Europäisches Patentamt / European Patent Office / Office européen des brevets**

(11) **EP 2 514 582 B1**

(12) **EUROPEAN PATENT SPECIFICATION**

(45) Date of publication and mention of the grant of the patent:
**12.03.2014 Bulletin 2014/11**

(21) Application number: **10837631.0**

(22) Date of filing: **15.12.2010**

(51) Int Cl.:
*B29C 59/00* (2006.01)     *B29C 59/02* (2006.01)
*B29K 33/04* (2006.01)     *B29L 7/00* (2006.01)
*C08L 33/04* (2006.01)

(86) International application number:
**PCT/JP2010/072559**

(87) International publication number:
**WO 2011/074605 (23.06.2011 Gazette 2011/25)**

(54) **METHOD FOR IMPARTING EMBOSSED SHAPES TO ACRYLIC RESIN FILM**

VERFAHREN ZUR HERSTELLUNG VON GEPRÄGTEN FORMEN AUF ACRYLHARZFOLIEN

PROCEDE POUR CONFERER DES FORMES EN RELIEF A UN FILM DE RESINE ACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2009   JP 2009283808**

(43) Date of publication of application:
**24.10.2012   Bulletin 2012/43**

(73) Proprietor: **Mitsubishi Rayon Co., Ltd.**
**Tokyo 100-8253 (JP)**

(72) Inventors:
• **ABE, Junichi**
  **Otake-shi**
  **Hiroshima 739-0693 (JP)**
• **SUEMURA, Kenji**
  **Toyohashi-shi**
  **Aichi 440-8601 (JP)**
• **YAMAGUCHI, Yuko**
  **Otake-shi**
  **Hiroshima 739-0693 (JP)**

(74) Representative: **Ter Meer Steinmeister & Partner**
**Patentanwälte**
**Mauerkircherstrasse 45**
**81679 München (DE)**

(56) References cited:
WO-A1-2009/142048     JP-A- 2005 163 003
JP-A- 2006 022 262     JP-A- 2007 112 989
JP-A- 2007 270 133

## Description

Technical Field

The present invention relates to a method for embossing an acrylic resin film using an embossing die.

Background Art

Acrylic resin molded bodies using an acrylic resin containing a rubber component are widely used. Particularly, acrylic resin films are used in an application of lamination on the surface of various molded articles such as resin molded articles, wood products, metal molded articles and the like, utilizing a feature of excellence in properties such as transparency, weather resistance, flexibility, processability and the like. Specific examples of the application include wheeled vehicle interior decorations, furniture, surface materials for building materials such as door materials, window frames, skirting boards, bathroom interior decorations and the like, marking films and highly bright reflection material covering films.

As the acrylic resin film to be used in these applications, various films have been suggested and put to practical use. For example, patent document 1 suggests an acrylic resin film-form material which, when subjected to insert molding or in-mold molding, the molded article does not whiten, the film-form material satisfying surface hardness, heat resistance, chemical resistance and transparency or delustering property, which can be used in wheeled vehicle applications.

Further, patent document 1 exemplifies embossing, as one example of a method for reducing the luster of a film. However, there is no reference regarding how the property of imparting an embossed shape to a film is improved.

Patent document 2 discloses a method for imparting an embossed shape to an acrylic resin film.

Prior Technical Document

Patent Document

Patent document 1: JP-A No. 2005-163003
Patent document 2: WO-A-2009/142 048 published in english as US-A-2011/0052 873.

Summary of the Invention

Problem to be Solved by the Invention

The present invention has an object of providing a method for imparting an embossed shape to an acrylic resin film, which gives an excellent embossed shape-imparting property, an excellent film handling property and an excellent die-release property.

Means for Solving the Problem

The present invention is a method for imparting an embossed shape to an acrylic resin film by an embossing die at a temperature T[°C] represented by the following formula (1), wherein the storage modulus (E') under a measurement frequency of 0.1 Hz of the acrylic resin film at the temperature T[°C] is 0.20 to 0.36 Mpa and the elongation at break under the following evaluation method is 100% or more:

$$<\text{Formula (1)}> \quad T_D + 25°C \leq T \leq T_D + 50°C$$

($T_D$: heat distortion temperature of acrylic resin film)

<Evaluation method of elongation at break>

Test specimen: film-form material having a thickness of 50 $\mu$m and a width of 15 mm
Tensile test conditions: initial chuck-to-chuck distance: 50 mm, tensile speed: 500 mm/min, temperature: 23°C.

Effect of the Invention

The present invention is capable of providing a method for imparting an embossed shape to an acrylic resin film, which gives an excellent embossed shape-imparting property, an excellent film handling property and an excellent die-release property. The acrylic resin film endowed with an embossed shape by the inventive method is suitable for various applications such as wheeled vehicle interior decorations, furniture, surface materials for building materials such as door materials, window frames, skirting boards, bathroom interior decorations and the like, marking films, highly bright reflection material covering films and the like.

Modes for Carrying Out the Invention

[Acrylic resin film]

The storage modulus (E') under a measurement frequency of 0.1 Hz of the acrylic resin film to be used in the present invention at the above- described temperature T[°C] is 0.20 to 0.36 Mpa, preferably 0.22 to 0.30 MPa, more preferably 0.22 to 0.28 MPa. The lower limit values of these ranges are significant from the standpoint of transferability of an acrylic resin film to die and a die-release property. The upper limit values are significant from the standpoint of transferability in embossing (that is, embossed shape- imparting property). When the storage modulus (E') is within the above-described range, an embossed shape-imparting property is excellent thus causing no need of raising the temperature of a die, a die-release property of an acrylic resin film is excellent, an acrylic resin film is not broken in releasing, a sufficient cooling time is not required, and productivity is excellent.

The storage modulus (E') can be controlled by the structure of a resin constituting an acrylic resin film, the kinds of respective components, and the composition thereof. For example, it can be controlled by the kind and the use amount of a cross-linking agent added into raw materials of a rubber- containing acrylic resin, and the kind and the use amount of a chain transfer agent for adjusting the molecular weight. When the use amount of a cross-linking agent is decreased, the storage modulus (E') tends to lower, and when the use amount of a chain transfer agent is increased, the storage modulus (E') tends to lower.

The storage modulus (E') can also be controlled by adding a specific acrylic resin to a resin constituting an acrylic resin film. This specific acrylic resin is, for example, an acrylic resin containing 50 to 100 wt% of an alkyl methacrylate unit having a C1-4 alkyl group and 0 to 50 wt% of at least one other vinyl monomer unit copolymerizable therewith, wherein the reduced viscosity of the polymer (0.1 g of the polymer is dissolved in 100 ml of chloroform, and measured at 25°C) is 0.1 L/g or less. When the addition amount of this specific acrylic resin is large, the storage modulus (E') tends to lower.

For the storage modulus (E') to be within the above-described range, it is preferable that a high molecular weight acrylic processing aid usually added in forming an acrylic resin film is not added.

The acrylic resin film to be used in the present invention has an elongation at break of 100% or more. When the elongation at break is 100% or more, the mechanical strength of an acrylic resin film is improved, and a handling property is excellent. This elongation at break is obtained by carrying out a tensile test on a test specimen composed of an acrylic resin film having a thickness of 50 $\mu$m and a width of 15 mm, under conditions of an initial chuck-to-chuck distance of 50 mm, a tensile speed of 500 mm/min and a temperature of 23°C, and calculating according to the following equation.

$$\text{Elongation at break} = (\text{chuck-to-chuck distance at break} - \text{initial}$$

$$\text{chuck-to-chuck distance})/\text{initial chuck-to-chuck distance}$$

The elongation at break can be controlled by the structure of a resin constituting an acrylic resin film, the kinds of respective components, and the composition thereof. For example, it can be controlled by the structure of a rubber-containing acrylic resin, the kind and the use amount of a cross- linking agent added into raw materials of a rubber-containing acrylic resin, and the kind and the use amount of a chain transfer agent for adjusting the molecular weight. Further, it can also be controlled by the ratio of a rubber-containing acrylic resin in an acrylic resin film.

The elongation at break can also be controlled by the addition of the specific acrylic resin having a reduced viscosity of 0.1 L/g or less described above. When the addition amount of this acrylic resin is large, the elongation at break tends to decrease.

In the present invention, an embossed shape is imparted to this acrylic resin film using an embossing die at a specific processing temperature T (die surface temperature). This embossing may be a roughening treatment to lower the luster level of the surface of a film thereby generating a delustered feeling, or an embossing treatment for other object.

The temperature T in embossing an acrylic resin film is a temperature higher by 25°C to 50°C than the heat distortion temperature $T_D$ of an acrylic resin film. In embossing at a temperature higher by 25°C or more than the heat distortion temperature $T_D$, an embossed shape-imparting property is excellent. In embossing at a temperature higher by 50°C or less than the heat distortion temperature $T_D$, a die-release property is excellent. The heat distortion temperature $T_D$ is a value obtained by measuring according to ASTM D648 (method B) under the following conditions using a resin composition as a raw material for an acrylic resin film.

· Sample size: 127 mm×6.5 mm×12.7 mm (length×width×height)
· Load: 0.45 MPa
· Amount of deflection according to Edgewise technique: 0.25 mm

The thickness of an acrylic resin film is preferably 10 to 500 $\mu$m, more preferably 15 to 200 $\mu$m, particularly preferably 40 to 200 $\mu$m. When the thickness of an acrylic resin film is within these ranges, the stiffness of the film becomes moderate, thus, there is a tendency that the laminating property, the secondary processability and the like of the film are excellent. Further, there is a tendency that the film formability of an acrylic resin film is stabilized, thereby rendering production of an acrylic resin film easy.

The heat distortion temperature $T_D$ (measured based on ASTM D648) of an acrylic resin film is preferably 70°C or higher. If the heat distortion temperature $T_D$ is 70°C or higher, and when the acrylic resin film is, for example, laminated on the surface of a base material, there is a tendency that, in heating the laminate, generation of the surface roughening of the acrylic resin film can be suppressed. Further, if the heat distortion temperature $T_D$ is 80°C or higher, and when the acrylic resin film is, for example, laminated on the surface of a base material, there is a tendency that, in thermally processing the laminate carrying the film with the surface roughened by embossing, lowering of design due to luster returning of the embossed surface can be suppressed.

Regarding the heat shrinkage ratio of an acrylic resin film, the heat shrinkage ratio along the film flow direction [(length before heating-length after heating)/length before heating (%)] is preferably 0 to 10% when the acrylic resin film is heated at 100°C for 30 minutes. When the heat shrinkage ratio is within this range, there is a tendency that an embossed shape-imparting property and a die-release property are further excellent.

An acrylic resin film can be laminated on the surface of various base materials such as resin molded articles, wood products, metal molded articles and the like, to produce a laminate having the acrylic resin film on its surface. Further, on an acrylic resin film, printing can be performed by a known printing method, if necessary, for imparting design. When an acrylic resin film is laminated on a base material, it is preferable that an acrylic resin film having one printed surface is laminated so that the printed surface comes into contact with the base material from the standpoint of protection of the printed surface and endowment of a luxurious feeling. When an acrylic resin film is used as a transparent alternative to a coated film while taking advantage of the color tone of a base material, the acrylic resin film can be used with being transparent. An acrylic resin film is suitable in the application of a laminate taking advantage of the color tone of a base material as described above, since it has excellent transparency, a depth feeling and a luxurious feeling. Further, an acrylic resin film can be subjected to a coloration processing on its surface, if necessary.

In the present invention, the acrylic resin film has a meaning including also a sheet-form material.

[Rubber-containing acrylic resin]

It is preferable for the acrylic resin film to contain a rubber-containing acrylic resin. Examples of the rubber-containing acrylic resin include polymers obtained by graft-polymerizing a monomer containing mainly methyl methacrylate, in the presence of a rubber containing as a main constituent unit at least one selected from n-butyl acrylate and 2-ethyl hexyl acrylate.

The acrylic monomer constituting the rubber-containing acrylic resin includes, for example, alkyl methacrylates such as ethyl methacrylate, n-propyl methacrylate, i-propyl methacrylate, n-butyl methacrylate, i-butyl methacrylate, t-butyl methacrylate and the like and alkyl acrylates such as methyl acrylate, ethyl acrylate, n-propyl acrylate, i-propyl acrylate, i-butyl acrylate, t-butyl acrylate and the like, in addition to n-butyl acrylate, 2-ethyl hexyl acrylate and methyl methacrylate. Further, vinyl monomers other than acrylic monomers, such as vinyl acetate, vinyl chloride, styrene, acrylonitrile, methacrylonitrile and the like, can also be used together.

Specific examples of the rubber-containing acrylic resin include multi-layer structured polymers as described in JP-A No. 52-56150, JP-A No. 57-140161, JP-A No. 58-215444, JP-A No. 9-263614, JP-A No. 11-228710, JP-A No. 2003-128735, JP-A No. 2003-211446, JP-A No. 2004-2665, JP-A No. 2005-163003 and JP-A No. 2006-249198, and rubber-containing acrylic resins as described in JP-A No. 2006-110744, JP-A No. 2006-91847, JP-A No. 2007-91784 and JP-A No. 2007-178514.

Especially, preferable are rubber-containing multi-stage polymers containing an alkyl acrylate, an alkyl methacrylate and a graft crossing agent as constituent components of the polymer. Further, preferable are rubber- containing multi-stage polymers obtained by polymerizing an elastic polymer (i) containing an alkyl acrylate having a C1-8 alkyl group and/or an alkyl methacrylate having a C1-4 alkyl group and a graft crossing agent at least as constituent components of the polymer, and a hard polymer (ii) containing an alkyl methacrylate having a C1-4 alkyl group at least as a constituent component of the polymer, in this order. The elastic polymer (i) may be constituted of a polymer obtained by polymerizing monomer mixtures of different compositions in multi-stages. The hard polymer (ii) may be constituted of a polymer obtained by polymerizing monomer mixtures of different compositions in multi-stages. The rubber-containing multi-stage polymer may contain a polymer (for example, an intermediate polymer (iii) described later, or the like) other than the elastic polymer (i) and the hard polymer (ii).

The elastic polymer (i) is, for example, a polymer containing an alkyl acrylate having a C1-8 alkyl group and/or an alkyl methacrylate having a C1-4 alkyl group (i-1), other monomer having a copolymerizable double bond to be used if necessary (i-2), a polyfunctional monomer to be used if necessary (i-3) and a graft crossing agent (i-4), as constituent components, which is initially polymerized in polymerizing the rubber-containing multi-stage polymer.

Of components (i-1) constituting the elastic polymer (i), the alkyl acrylate having a C1-8 alkyl group may be any of linear or branched. Specific examples thereof include methyl acrylate, ethyl acrylate, propyl acrylate, butyl acrylate, 2-ethyl hexyl acrylate, n-octyl acrylate and the like. These can be used singly or in combination. Among them, those having lower glass transition temperature (Tg) are more preferable. The alkyl methacrylate having a C1-4 alkyl group may be any of linear or branched. Specific examples thereof include methyl methacrylate, ethyl methacrylate, propyl methacrylate, butyl methacrylate and the like. These can be used singly or in combination.

It is preferable that the component (i-1) is used in a range of 60 to 100 parts by weight with respect to 100 parts by weight of the sum of the components (i-1) to (i-3).

It is most preferable that alkyl (meth)acrylates of the kinds used in the elastic polymer (i) are used integratedly also in the subsequent polymerization of the hard polymer. Regarding the polymers (i) and (ii), two or more alkyl (meth) acrylates may be mixed, or another kind of acrylate may be used. Here, "(meth)acrylate" means an acrylate and/or a methacrylate.

The component (i-2) constituting the elastic polymer (i) may be used according to the need. Specific examples thereof include higher alkyl acrylates having a C9 or more alkyl group, lower alkoxy acrylates, acrylate monomers such as cyanoethyl acrylate and the like, acrylamide, acrylic acid, methacrylic acid, styrene, alkyl-substituted styrenes, acrylonitrile, methacrylonitrile and the like.

It is preferable that the component (i-2) is used in a range of 0 to 40 parts by weight with respect to 100 parts by weight of the sum of the components (i-1) to (i-3).

The component (i-3) constituting the elastic polymer (i) may be used according to the need. Particularly, alkylene glycol dimethacrylates such as ethylene glycol dimethacrylate, 1,3-butylene glycol dimethacrylate, 1,4-butylene glycol dimethacrylate, propylene glycol dimethacrylate and the like are preferable. Further, polyvinylbenzenes such as divinylbenzene, trivinylbenzene and the like can also be used. Even if the component (i-3) does not act at all, a fairly stable rubber-containing multi-stage polymer is obtained, as long as a graft crossing agent is present. When, for example, heat resistance and the like are strictly needed, the component (i-3) may be optionally used according to its addition object.

It is preferable that the component (i-3) is used in a range of 0 to 10 parts by weight with respect to 100 parts by weight of the sum of the components (i-1) to (i-3).

Specific examples of the component (i-4) constituting the elastic polymer (i) include allyl, methallyl or crotyl esters of copolymerizable $\alpha,\beta$-unsaturated carboxylic acids or dicarboxylic acids, and the like. Among them, allyl esters of acrylic acid, methacrylic acid, maleic acid or fumaric acid are preferable. Particularly, allyl methacrylate performs an excellent effect. Additionally, triallyl cyanurate, triallyl isocyanurate and the like are also effective. In the component (i-4), mainly a conjugated unsaturated bond of its ester reacts quicker by far than an allyl group, a methallyl group or a crotyl group, to generate a chemical bond.

The use amount of the component (i-4) with respect to 100 parts by weight of the sum of the components (i-1) to (i-3) is preferably 0.1 to 2 parts by weight, more preferably 0.5 to 1.5 parts by weight. The lower limit values of these ranges are significant from the standpoint of the effective amount of a graft bond. The upper limit values are significant from the standpoint of moderately suppressing the amount of a reaction with a polymer to be subsequently formed by polymerization, thereby preventing lowering of the elasticity of a rubber elastic body and from the standpoint of the embossing property of the resulting acrylic resin film.

The content of the elastic polymer (i) in the rubber-containing multi-stage polymer is preferably 5 to 70 wt%, more preferably 5 to 50 wt%.

The elastic polymer (i) may be polymerized in two or more divided stages. In the case of polymerization in two or more divided stages, the ratio of monomer components constituting each stage may be varied.

The hard polymer (ii) constituting the rubber-containing multi-stage polymer is a component correlated with the moldability, the mechanical property and the like of the rubber-containing multi-stage polymer. This hard polymer (ii) is, for example, a polymer containing an alkyl methacrylate having a C1-4 alkyl group (ii-1) and other monomer having a copolymer- rizable double bond to be used if necessary (ii-2), as constituent components, which is polymerized finally in polymerizing the rubber-containing multi-stage polymer.

Preferable specific examples of the components (ii-1) and (ii-2) are the same as those mentioned for the components (i-1) and (i-2) of the elastic polymer (i).

The use amount of the component (ii-1) is preferably 51 to 100 parts by weight. The use amount of the component (ii-2) is preferably 0 to 49 parts by weight. These use amount ranges are based on 100 parts by weight of the sum of the components (ii-1) and (ii-2).

Tg of the hard polymer (ii) alone is preferably 60°C or higher, more preferably 80°C or higher. The content of the hard polymer (ii) in the rubber-containing multi-stage polymer is preferably 30 to 95 wt%, more preferably 40 to 70 wt%.

The rubber-containing multi-stage polymer has the elastic layer polymer (i) and the hard polymer (ii) described above as basic structures. Further, an intermediate polymer (iii) may be polymerized after polymerization of the elastic polymer (i) and before polymerization of the hard polymer (ii).

This intermediate polymer (iii) is, for example, a polymer containing an alkyl acrylate having a C1-8 alkyl group (iii-1), an alkyl methacrylate having a C1-4 alkyl group (iii-2), other monomer having a copolymerizable double bond to be used if necessary (iii-3), a polyfunctional monomer to be used if necessary (iii-4) and a graft crossing agent (iii-5), as constituent components of the polymer, in which the alkyl acrylate component amount decreases monotonically from the elastic polymer (i) toward the hard polymer (ii). The monotonic decrease means that the composition of the intermediate polymer (iii) has the composition of certain one point between the composition of the elastic polymer (i) and the composition of the hard polymer (ii), and that the composition comes close from the composition of the elastic polymer (i) to the composition of the hard polymer (ii) gradually (continuously or step-by-step). Particularly, the presence of the composition of certain intermediate one point is preferable from the standpoint of the transparency of the resulting molded body.

Specific examples of the components (iii-1) to (iii-5) are the same as those mentioned for the components (i-1) to (i-4) of the elastic polymer (i). Particularly, a graft crossing agent as the component (iii-5) is a component necessary for densely bonding each polymer, to obtain various excellent properties.

The used amount of the component (iii-1) is preferably 10 to 90 parts by weight. The use amount of the component (iii-2) is preferably 10 to 90 parts by weight. The use amount of the component (iii-3) is preferably 0 to 20 parts by weight. The use amount of the component (iii-4) is preferably 0 to 10 parts by weight. The use amount of the component (iii-5) is preferably 0.1 to 2 parts by weight. These use amount ranges are based on 100 parts by weight of the sum of the components (iii-1) to (iii-4).

The content of the intermediate polymer (iii) in the rubber-containing multi-stage polymer is preferably 0 to 35 wt%.

The average particle size of the rubber-containing multi-stage polymer produced by an emulsion polymerization method and the like is preferably 0.08 to 0.3 $\mu$m in view of the mechanical property and the transparency of a molded body containing this as the main component.

As a further preferable rubber-containing acrylic resin, the following rubber-containing multi-stage polymer (I) is mentioned. The rubber-containing multi-stage polymer (I) is obtained by polymerizing a first elastic polymer (A) containing an alkyl acrylate having a C1-8 alkyl group and/or an alkyl methacrylate having a C1-4 alkyl group and a graft crossing agent at least as constituent components of the first elastic polymer,
a second elastic polymer (B) containing an alkyl acrylate having a C1-8 alkyl group and a graft crossing agent at least as constituent components of the second elastic polymer,
an intermediate polymer (D) containing an alkyl acrylate having a C1-8 alkyl group and/or an alkyl methacrylate having a C1-4 alkyl group and a graft crossing agent at least as constituent components of the intermediate polymer
and a hard polymer (C) containing an alkyl methacrylate having a C1-4 alkyl group at least as a constituent component of the hard polymer, in this order.

The first elastic polymer (A) constituting the rubber-containing multi-stage polymer (I) is a cross-linked polymer containing an alkyl acrylate having a C1-8 alkyl group and/or an alkyl methacrylate having a C1-4 alkyl group (A1), other monomer having a copolymerizable double bond to be used if necessary (A2), a polyfunctional monomer to be used if necessary (A3) and a graft crossing agent (A4), as constituent components, which is initially polymerized in polymerizing the rubber-containing multi-stage polymer(I).

Of components (A1) constituting the first elastic polymer (A), the alkyl acrylate having a C1-8 alkyl group may be any of linear or branched. Specific examples thereof include methyl acrylate, ethyl acrylate, propyl acrylate, butyl acrylate, 2-ethyl hexyl acrylate, n-octyl acrylate and the like. These can be used singly or in combination. Among them, those having low glass transition temperature (Tg) are more preferable. Of components (A1), the alkyl methacrylate having a C1-4 alkyl group may be any of linear or branched. Specific examples thereof include methyl methacrylate, ethyl methacrylate, propyl methacrylate, butyl methacrylate and the like. These can be used singly or in combination.

It is preferable that the component (A1) is used in a range of 80 to 100 parts by weight with respect to 100 parts by weight of the sum of the components (A1) to (A3). It is most preferable that alkyl (meth)acrylates of the kinds used in the first elastic polymer (A) are used integratedly also in the subsequent polymerization of polymers (B) to (D).

Regarding the polymers (A) and (D), two or more alkyl (meth)acrylates may be mixed, or another kind of acrylate may be used.

The component (A2) constituting the first elastic polymer (A) may be used according to the need. Specific examples thereof include higher alkyl acrylates having a C9 or more alkyl group, lower alkoxy acrylates, acrylate monomers such as cyanoethyl acrylate and the like, acrylamide, acrylic acid, methacrylic acid, styrene, alkyl-substituted styrenes, acrylonitrile and methacrylonitrile.

It is preferable that the component (A2) is used in a range of 0 to 20 parts by weight with respect to 100 parts by weight of the sum of the components (A1) to (A3).

The component (A3) constituting the first elastic polymer (A) may be used according to the need. Particularly, alkylene glycol dimethacrylates such as ethylene glycol dimethacrylate, 1,3-butylene glycol dimethacrylate, 1,4-butylene glycol dimethacrylate, propylene glycol dimethacrylate and the like are preferable. Further, polyvinylbenzenes such as divinylbenzene, trivinylbenzene and the like can also be used. Even if the component (A3) does not act at all, a fairly stable rubber-containing multi-stage polymer is obtained, as long as a graft crossing agent is present. When, for example, heat resistance and the like are strictly needed, the component (A3) may be optionally used according to its addition object.

It is preferable that the component (A3) is used in a range of 0 to 10 parts by weight with respect to 100 parts by weight of the sum of the components (A1) to (A3).

The component (A4) constituting the first elastic polymer (A) include allyl, methallyl or crotyl esters of copolymerizable $\alpha,\beta$-unsaturated carboxylic acids or dicarboxylic acids, and the like. Among them, allyl esters of acrylic acid, methacrylic acid, maleic acid or fumaric acid are preferable. Particularly, allyl methacrylate performs an excellent effect. Additionally, triallyl cyanurate, triallyl isocyanurate and the like are also effective. In the component (A4), mainly a conjugated unsaturated bond of its ester reacts quicker by far than an allyl group, a methallyl group or a crotyl group, to generate a chemical bond.

The use amount of the component (A4) with respect to 100 parts by weight of the sum of the components (A1) to (A3) is preferably 0.1 to 2 parts by weight, more preferably 0.5 to 1.5 parts by weight. The lower limit values of these ranges are significant from the standpoint of the effective amount of a graft bond. The upper limit values are significant from the standpoint of moderately suppressing the amount of a reaction with the second elastic polymer (B) to be formed by polymerization in the second stage, thereby preventing lowering of the elasticity of a two-stage cross-linked rubber elastic body composed of two-stage elastic body structures and from the standpoint of the embossing property of the resulting acrylic resin film.

The content of the first elastic polymer (A) in the rubber-containing multi-stage polymer (I) is preferably 5 to 35 wt%, more preferably 5 to 15 wt%. It is preferable that this content is smaller than the content of the second elastic polymer (B).

The second elastic polymer (B) constituting the rubber-containing multi-stage polymer (I) is a main component imparting rubber elasticity to the rubber-containing multi-stage polymer. The second elastic polymer (B) is a cross-linked polymer containing an alkyl acrylate having a C1-8 alkyl group (B1), other monomer having a copolymerizable double bond to be used if necessary (B2), a polyfunctional monomer to be used if necessary (B3) and a graft crossing agent (B4), as constituent components.

Specific examples of the components (B1) to (B4) are the same as those mentioned for the components (A1) to (A4) of the first elastic polymer (A).

The use amount of the component (B1) is preferably 80 to 100 parts by weight. The use amount of the component (B2) is preferably 0 to 20 parts by weight. The use amount of the component (B3) is preferably 0 to 10 parts by weight. The use amount of the component (B4) is preferably 0.1 to less than 2 parts by weight. These use amount ranges are based on 100 parts by weight of the sum of the components (B1) to (B3).

Tg of the second elastic polymer (B) alone is preferably 0°C or lower, more preferably -30°C or lower. This Tg range is significant from the standpoint of elasticity.

The content of the second elastic polymer (B) in the rubber-containing multi-stage polymer (I) is preferably 10 to 45 wt%. It is preferable that this content is larger than the content of the first elastic polymer (A).

The hard polymer (C) constituting the rubber-containing multi-stage polymer is a component correlated with the moldability, the mechanical property and the like. This hard polymer (C) is a polymer containing an alkyl methacrylate having a C1-4 alkyl group (C1) and other monomer having a copolymerizable double bond to be used if necessary (C2), as constituent components, which is polymerized finally in polymerizing the rubber-containing multi-stage polymer (I).

Specific examples of the components (C1) and (C2) are the same as those mentioned for the components (A1) and (A2) of the first elastic polymer (A).

The use amount of the component (C1) is preferably 51 to 100 parts by weight. The use amount of the component (C2) is preferably 0 to 49 parts by weight. These use amount ranges are based on 100 parts by weight of the sum of the components (C1) and (C2).

To the hard polymer (C), a chain transfer agent (C3) for adjusting the molecular weight is preferably added. The use amount of the component (C3) is preferably 0.15 to 2 parts by weight. This use amount range is based on 100 parts by weight of the sum of the components (C1) and (C2).

Regarding the molecular weight of the hard polymer (C), the number- average molecular weight measured by gel permeation chromatography is preferably 80000 or less, more preferably 70000 or less. Tg of the hard polymer (C) alone is preferably 60°C or higher, more preferably 80°C or higher.

The content of the hard polymer (C) in the rubber-containing multi-stage polymer (I) is preferably 10 to 80 wt%, more preferably 40 to 60 wt%.

The rubber-containing multi-stage polymer (I) has the first elastic layer polymer (A), the second elastic polymer (B) and the hard polymer (C) described above, as basic structures. Further, an intermediate polymer (D) is polymerized after polymerization of the second elastic polymer (B) and before polymerization of the hard polymer (C). This intermediate polymer (D) is the same as the above-described intermediate polymer (iii).

It is preferable for the rubber-containing multi-stage polymer (I) that, when dispersed in acetone, the number of particles having a diameter of 55 $\mu$m or more present in the dispersion is 0 to 50 per 100 g of the rubber-containing multi-stage polymer.

Though the method for producing the rubber-containing multi-stage polymer (I) is not particularly restricted, when the polymer (I) is produced for example by emulsion polymerization, preferable is a method in which an emulsified liquid prepared by mixing water and a surfactant with a monomer mixture at least containing an alkyl acrylate having a C1-8 alkyl group and/or an alkyl methacrylate having a C1-4 alkyl group and a graft crossing agent which gives the first elastic polymer (A) layer is fed to a reaction vessel and polymerized, and monomers or monomer mixtures which give the second elastic polymer (B), the intermediate polymer (D) and the hard polymer (C) are fed in turn to the reaction vessel and polymerized. If an emulsified liquid prepared by mixing water and a surfactant with a monomer mixture which gives the first elastic polymer (A) is fed to a reaction vessel and polymerized, particularly a rubber-containing multi-stage polymer which, when dispersed in acetone, the number of particles having a diameter of 55 $\mu$m or more present in the dispersion is 0 to 50 per 100 g of the rubber-containing multi-stage polymer, can be obtained easily.

Regarding the weight ratio of the monomer mixture to water to be used in this procedure, the amount of water is preferably 10 parts to 500 parts, more preferably 100 parts to 300 parts with respect to 100 parts of the monomer mixture.

As the surfactant to be used in preparing an emulsified liquid, anionic, cationic and nonionic surfactants can be used. Particularly, anionic surfactants are preferable. Specific examples of the anionic surfactant include carboxylic salts such as rosinate soap, potassium oleate, sodium stearate, sodium myristate, sodium N-lauroylsarcosinate, dipotassium alkenylsuccinate and the like; sulfate salts such as sodium laurylsulfate and the like; sulfonic salts such as sodium dioctylsulfosuccinate, sodium dodecylbenzenesulfonate, sodium alkyl diphenyl ether disulfonate and the like; and phosphate salts such as sodium polyoxyethylene alkyl phenyl ether phosphate and the like.

The method for preparing an emulsified liquid includes, for example, a method in which a monomer mixture is charged into water, then, a surfactant is added, a method in which a surfactant is charged into water, then, a monomer mixture is added, and a method in which a surfactant is charged into a monomer mixture, then, water is added. Of them, the method in which a monomer mixture is charged into water, then, a surfactant is added and the method in which a surfactant is charged into water, then, a monomer mixture is added are preferable.

Example of the mixing apparatus for preparing an emulsified liquid by mixing water and a surfactant with a monomer mixture which gives the first elastic polymer (A) layer include stirrers equipped with a stirring blade, compulsory emulsification apparatuses such as a homogenizer, a homomixer and the like and membrane emulsification apparatuses.

The emulsified liquid may have any dispersed structure of W/O type or O/W type. Particularly preferable are those of O/W type in which oil drops of a monomer mixture are dispersed in water and the diameter of the oil drop in the dispersion phase is 100 $\mu$m or less. The diameter of the oil drop is more preferably 50 $\mu$m or less, particularly preferably 15 $\mu$m or less. For decreasing the number of particles having a diameter of 55 $\mu$m or more present in a dispersion prepared by dispersing the rubber-containing multi-stage polymer (I) in acetone, the diameter of the oil drop is preferably 100 $\mu$m or less.

As the polymerization initiator to be used in forming the first elastic polymer (A) layer, the second elastic polymer (B), the intermediate polymer (D) and the hard polymer (C) constituting the rubber-containing multi-stage polymer (I), know agents can be used. As the polymerization initiator addition method, use can be made of methods of adding the agent to either an aqueous phase or a monomer phase, or to both phases. Preferable examples of the polymerization initiator include peroxide and azo initiators, or redox initiators combining an oxidizer and a reducing agent. Of them, redox initiators are more preferable, sulfoxylate initiators combining ferrous sulfate·disodium ethylenediaminetetraacetate Rongalite · hydroperoxide are particularly preferable.

Particularly, with respect to the method in which an emulsified liquid prepared by mixing water and a surfactant with a monomer mixture which gives the first elastic polymer (A) is fed to a reaction vessel and polymerized, then, monomers or monomer mixtures which give the second elastic polymer (B), the intermediate polymer (D) and the hard polymer (C) are fed in turn into the reaction vessel, the most preferable is a method in which an aqueous solution containing ferrous sulfate disodium ethylenediaminetetraacetate·Rongalite is heated up to the polymerization temperature, an emulsified liquid is fed and polymerized, then, monomer mixtures which give the second elastic polymer (B), the intermediate polymer (D) and the hard polymer (C), containing a polymerization initiator such as a peroxide and the like, are fed in turn to the reaction vessel and polymerized, as the method for obtaining the rubber-containing multi-stage polymer (I).

The polymerization temperature varies depending on the kind and the amount of a polymerization initiator, and is preferably 40 to 120°C, more preferably 60 to 95°C.

A polymer latex containing the rubber-containing multi-stage polymer (I) obtained by emulsion polymerization can be treated using a filtration apparatus equipped with a filtering medium if necessary. This filtration treatment is a treatment for removal of scales generated during polymerization from the latex, or removal of contaminants present in polymerization raw materials or mixed in from outside during polymerization, and is a preferable method for obtaining the rubber-containing multi-stage polymer (I). As the filtration apparatus, for example, GAF Filter System (trade name) manufactured by Isp (Filters) Pte Ltd. utilizing a bag-form mesh filter and a centrifugal filtration apparatus in which a cylindrical filtering medium is placed in the inner side of a cylindrical filtration chamber and a stirring blade is placed in the filtering medium, are preferable.

The method for obtaining the rubber-containing multi-stage polymer (I) in the form of powder from the polymer latex described above is not particularly restricted, and methods such as salting out or acid deposition coagulation, spray drying, freeze drying and the like are listed.

For improving the weather resistance of a base material when an acrylic resin film is laminated to the base material and used, an ultraviolet absorber can be compounded in the acrylic resin. In compounding an ultraviolet absorber, if necessary, a photostabilizer can be used together.

As the ultraviolet absorber, those having a molecular weight of 300 or more are preferable, those having a molecular weight of 400 or more are more preferable. Examples of the ultraviolet absorber having a molecular weight of 400 or more include benzotriazole ultraviolet absorbers and triazine ultraviolet absorbers. Examples of commercially marketed products of the benzotriazole ultraviolet absorber include TINUVIN 234 (trade name) manufactured by Ciba Specialty Chemicals and ADEKA STAB LA-31 (trade name) manufactured by ADEKA Corporation. Examples of commercially marketed products of the triazine ultraviolet absorber include TINUVIN 1577 (trade name) manufactured by Ciba Specialty Chemicals. The ultraviolet absorbers can be used singly or in combination. The compounding amount of the ultraviolet absorber is preferably 0.1 to 10 parts by weight, more preferably 0.2 to 5 parts by weight with respect to 100 parts by weight of the rubber-containing acrylic resin.

Examples of the photostabilizer include hindered amine radical scavengers. Examples of commercially marketed products of the photostabilizer include ADEKA STAB LA-57, ADEKA STAB LA-62, ADEKA STAB LA-67, ADEKA STAB LA-63 and ADEKA STAB LA-68 (all are trade names) manufactured by ADEKA Corporation, and SANOL LS-770, SANOL LS-765, SANOL LS-292, SANOL LS-2626, SANOL LS-1114 and SANOL LS-744 (all are trade names) manufactured by Sankyo Lifetech Co., Ltd. The photostabilizers can be used singly or in combination. The compounding amount of the photostabilizer is preferably 0.1 to 10 parts by weight, more preferably 0.2 to 5 parts by weight with respect to 100 parts by weight of the rubber-containing acrylic resin.

In the rubber-containing acrylic resin, various compounding agents such as a heat stabilizer, an antioxidant, a lubricant, a delustering agent, a plasticizer, an impact resistant agent, a processing aid, a foaming agent, a filler, an antibacterial agent, an antifungal agent, a releasing agent, an antistatic agent, a coloring agent, an ultraviolet absorber, a flame retardant and the like can be compounded, if necessary.

Examples of the antioxidant include phenolic antioxidants, sulfur-based antioxidants and phosphorus-based antioxidants.

Examples of the heat stabilizer include hindered phenolic heat stabilizers, sulfur-based heat stabilizers and hydrazine heat stabilizers.

Examples of the plasticizer include phthalic acid esters, phosphoric acid esters, fatty acid esters, aliphatic dibasic acid esters, oxybenzoic acid esters, epoxy compounds and polyesters.

Examples of the lubricant include fatty acid esters, fatty acids, metal soaps, fatty amides, higher alcohols and paraffins.

Examples of the antistatic agent include cationic antistatic agents, anionic antistatic agents, nonionic antistatic agents and ampholytic antistatic agents.

Examples of the flame retardant include bromine-based flame retardants, phosphorus-based flame retardants, chlorine-based flame retardants, nitrogen-based flame retardants, aluminum-based flame retardants, antimony-based flame retardants, magnesium-based flame retardants, boron-based flame retardants and zirconium-based flame retardants.

Examples of the filler include calcium carbonate, barium sulfate, talc, agalmatolite and kaolin.

Examples of the delustering agent include organic delustering agents and inorganic delustering agents. Particularly, preferable are spherical fine particles made of a cross-linked resin having a methyl methacrylate unit as the main constituent unit and having a weight-average particle size of 2 to 15 $\mu$m, from the standpoint of the transparency of an acrylic resin film. Further, preferable is at least one polymer selected from polymers (VI) and polymers (V) containing a hydroxyl group described in JP-A No. 2005-139416, from the standpoint of the transparency, the delustering property, the film formability and the moldability of an acrylic resin film. When this polymer is compounded into an acrylic resin film, a delustered film can be obtained without lowering physical properties such as the degree of elongation and the like. Therefore, an acrylic resin film in this case is preferable since, for example, it can suppress film breakage in secondary processing.

Each of the compounding agents described above can be used singly or in combination.

The method for compounding the compounding agent into a rubber-containing acrylic resin includes, for example, a method of feeding the compounding agent to an extruder for forming an acrylic resin film and a method in which a mixture prepared previously by compounding the compounding agent into a rubber-containing acrylic resin is kneaded and mixed by a kneader. Examples of the kneader to be used in the latter method include a single screw extruder, a twin screw extruder, a Banbury mixer and a roll kneader.

The rubber-containing acrylic resin can contain an acrylic resin containing 50 to 100 wt% of an alkyl methacrylate unit having a C1-4 alkyl group and 0 to 50 wt% of at least one other vinyl monomer copolymerizable therewith in which the reduced viscosity of the polymer (0.1 g of the polymer is dissolved in 100 ml of chloroform, and measured at 25°C) is 0.1 L/g or less, in a range not deteriorating the object of the present invention. Examples of commercially marketed products of this acrylic resin include ACRYPET VH, ACRYPET MD and ACRYPET MF (all are trade names) manufactured by Mitsubishi Rayon Co., Ltd. This acrylic resin is obtained, for example, by polymerizing a monomer containing at least 50wt% of an alkyl methacrylate having a C1-4 alkyl group. Particularly, polymethyl methacrylate is preferable. The content of this specific acrylic resin having a reduced viscosity of 0.1 L/g or less is preferably 0 to 60 parts by weight with respect to 100 parts by weight of the sum of the rubber-containing acrylic resin and the specific acrylic resin.

Examples of the method of polymerizing an acrylic resin include known suspension polymerization and emulsion polymerization methods.

Examples of the method for molding an acrylic resin film using a rubber-containing acrylic resin include melt extrusion methods such as a solution casting method, a T die method, an inflation method and the like. Of them, the T die method is preferable from the standpoint of economy.

An acrylic resin film can be laminated on the surface of various base materials, to obtain a laminate having the acrylic resin film on the surface.

Examples of the base material include resin molded articles, wood products and metal molded articles. Examples of the base resin constituting a resin molded article include ABS resins, AS resins, polystyrene resins, polycarbonate resins, vinyl chloride resins, acrylic resins, polyester resins and composite resins thereof. Of them, ABS resins, AS resins, polycarbonate resins, vinyl chloride resins and composite resins thereof are preferable, from the standpoint of adhesion with an acrylic resin film. Even in the case of use of resins (polyolefin resins and the like) manifesting no good adhesion with an acrylic resin film, a laminate can be obtained using an adhesive.

The method for producing a laminate having the acrylic resin film on the surface includes, for example, a thermal lamination method, in the case of molding into a two-dimensional shaped laminate. In the case of molding into a three-dimensional shaped laminate, the production method includes, for example, an insert molding method in which a previously shaped acrylic resin film is inserted into a die for injection molding and an in-mold molding method in which vacuum molding is performed in a die, then, injection molding is performed.

In the in-mold molding method, an acrylic resin film can be heated in a die having a vacuuming function before performing vacuum molding. This method is preferable from the standpoint of workability and economy, since molding of an acrylic resin film and injection molding of a base resin can be carried out in one step.

The heating temperature in the in-mold molding method is preferably not lower than the temperature for softening an acrylic resin film. The specific heating temperature is influenced by the thermal nature of an acrylic resin film or the shape of a molded article, and usually 70°C or higher. When the heating temperature is too high, the surface appearance deteriorates, the die-release property becomes worse, and the like, thus, it is preferable that the heating temperature is usually 170°C or lower.

On the surface of an acrylic resin film, surface treatments for imparting various functions can be performed, if necessary. Examples of the surface treatment include printing treatments such as silk printing, inkjet printing and the like, metal vapor deposition treatments for imparting metal appearance or preventing reflection, sputtering treatments, wet plating treatments, surface hardening treatments for improving surface hardness, water repellent treatments for preventing pollution, photocatalyst layer forming treatments, antistatic treatments for dust adhesion prevention or electromagnetic wave cutting, antireflection layer forming treatments and anti-glare treatments.

An acrylic resin film can be used, for example, as a protective film used for polarizing plates such as a liquid crystal display and the like or as a phase difference film used for wave plates for view angle compensation and phase difference compensation. Further, an acrylic resin film can be used, for example, as a protective film for highly bright reflection materials used for road signs, display plates, safety instruments intending visibility, and the like. Examples of the kind of the highly bright reflection material include a capsule type reaction material containing aluminum-vapor-deposited glass beads embedded in a base material and a prism type reflection material using a prism-worked resin sheet as a reflector.

EXAMPLES

The present invention will be illustrated by examples below. "Parts" in examples and comparative examples are "parts by weight". Abbreviations and evaluation methods are as described below.

"MMA": methyl methacrylate
"MA": methyl acrylate
"n-BA": n-butyl acrylate
"St": styrene
"AMA": allyl methacrylate
"1,3-BD": 1,3-butylene glycol dimethacrylate
"t-BH": t-butyl hydroperoxide
"LPO": lauryl peroxide
"CHP": cumene hydroperoxide
"n-OM": n-octylmercaptan
"Emulsifier (1)": sodium mono-n-dodecyloxytetraoxyethylenephosphate (manufactured by Toho Chemical Industry Co., Ltd., trade name: PHOSPHANOL RS-610NA) "
EDTA": disodium ethylenediaminetetraacetate

(1) Weight-average particle size:

The weight-average particle size of a polymer latex was measured by absorptiometry.

(2) Tg:

The glass transition temperature (Tg) of a polymer was calculated according to the FOX equation using values described in Polymer Hand Book (J. Brandrup, Interscience, 1989).

(3) Storage modulus (E'):

The storage modulus of a test specimen having a width of 6 mm and a length of 20 mm cut from an acrylic resin film was measured using EXSTAR DMS6100 manufactured by Seiko Instruments Inc. in tensile mode under conditions of a temperature rising rate of 2°C/min and a measurement frequency of 0.1Hz.

(4) Heat distortion temperature $T_D$ (°C):

The heat distortion temperature was measured according to ASTM D648 Method B under the following conditions.

- Sample size: 127 mm×6.5 mm×12.7 mm (length×width×height)
- Load: 0.45 MPa
- Amount of deflection according to Edgewise method: 0.25 mm

(5) Elongation at break:

A test specimen having a width of 15 mm cut from an acrylic resin film having a thickness of 50 $\mu$m was subjected to a tensile test under conditions of an initial chuck-to-chuck distance of 50 mm, a tensile speed of 500 mm/min and a temperature of 23°C, and the elongation at break was calculated according to the following equation.

$$\text{Elongation at break} = (\text{chuck-to-chuck distance at break} - \text{initial chuck-to-chuck distance})/\text{initial chuck-to-chuck distance} .$$

(6) Embossed shape-imparting property:

An acrylic resin film was laminated on the surface of a polycarbonate resin plate, the laminate was overlapped on an embossing die having a surface temperature of 115°C (arithmetic average roughness Ra: 5 μm) so that the acrylic resin film came into contact with the die, the surface of the polycarbonate resin plate was pressed by a roll of 80°C under conditions of a pressure of 0.05 MPa and a speed of 60 cm/min, thereafter, the laminate composed of the acrylic resin film and the polycarbonate resin plate was released from the embossing die, the delustered condition of the surface of the acrylic resin film after releasing was visually confirmed, and the embossed shape-imparting property was evaluated according to the following criteria.

"○": sufficiently disappeared luster
"✕": not sufficiently disappeared luster

(7) Die-release property:

The release property in releasing the laminate composed of the acrylic resin film and the polycarbonate resin plate from the embossing die in the step of the above-described evaluation method (6) of the embossed shape-imparting property was evaluated according to the following criteria.

"○": easy releasing
"x": not easy releasing

(8) Heat shrinkage ratio:

An acrylic resin film was heated in an over of 100°C for 30 minutes and the proportion of shrinkage along the flow direction was calculated according to the following equation, to obtain the heat shrinkage ratio.

$$\text{Heat shrinkage ratio (\%)} = (\text{length before heating} - \text{length after heating})/\text{length before heating}$$

[Preparation Example 1: production of rubber-containing acrylic resin (1)]

Into a vessel equipped with a stirrer was charged 8.5 parts of deionized water, a monomer component (a-1) containing 0.3 parts of MMA, 4.5 parts of n-BA, 0.2 parts of 1,3-BD, 0.05 parts of AMA and 0.025 parts of CHP was put into, and these were stirred to mix at room temperature. Next, 1.1 parts of an emulsifier (1) was put into while stirring the liquid in the vessel, and stirring thereof was continued for 20 minutes, to prepare an emulsified liquid.

Separately, into a polymerization vessel equipped with a condenser was charged 186.5 parts of deionized water, and it was heated up to 70°C. Further, a mixture prepared by adding 0.20 parts of sodium formaldehyde sulfoxylate, 0.0001 part of ferrous sulfate and 0.0003 parts of EDTA to 5 parts of deionized water was put in a lump into the polymerization vessel. Next, the above-described emulsified liquid was dropped over a period of 8 minutes while stirring the liquid in the polymerization vessel under nitrogen, the reaction thereof was continued for 15 minutes, to complete polymerization of a first elastic polymer (1-A-1).

Subsequently, a monomer component (a-2) containing 1.5 parts of MMA, 22.5 parts of n-BA, 1.0 part of 1,3-BD and 0.25 parts of AMA was dropped, together with 0.016 parts of CHP, into the polymerization vessel over a period of 90 minutes. Thereafter, the reaction thereof was continued for 60 minutes, to obtain an elastic polymer (1-A) containing a second elastic polymer (1-A-2). Tg of the first elastic polymer (1-A-1) alone was -48°C, and Tg of the second elastic polymer (1-A-2) alone was -48°C.

Subsequently, a monomer component (b) containing 6 parts of MMA, 4 parts of n-BA and 0.075 parts of AMA was dropped, together with 0.0125 parts of CHP, into the polymerization vessel over a period of 45 minutes. Thereafter, the reaction thereof was continued for 60 minutes, to form an intermediate polymer (1-B). Tg of the intermediate polymer (1-B) alone was 20°C.

Subsequently, a monomer component (c) containing 55.2 parts of MMA, 4.8 parts of n-BA, 0.205 parts of n-OM and 0.08 parts of t-BH was dropped into the polymerization vessel over a period of 140 minutes. Thereafter, the reaction thereof was continued for 60 minutes, to form a hard polymer (1-C), obtaining a polymer latex of a rubber-containing acrylic resin (1). Tg of the hard polymer (1-C) alone was 84°C. The weight-average particle size of the rubber-containing acrylic resin (1) was 0.12 $\mu$m.

The polymer latex of the rubber-containing acrylic resin (1) was filtrated using a vibrating filtration device equipped with a mesh (average aperture: 62 $\mu$m) made of SUS as a filtering medium. Thereafter, the filtrated product was coagulated in an aqueous solution containing 3 parts of calcium acetate, recovered by washing with water, and dried to obtain a powdery rubber-containing acrylic resin (1).

[Preparation Example 2: production of rubber-containing acrylic resin (2)]

A rubber-containing acrylic resin (2) was obtained in the same manner as in Preparation Example 1, excepting that the use amount of n-OM was changed to 0.23 parts.

[Preparation Example 3: production of thermoplastic polymer (3) (high molecular weight acrylic processing aid)]

Into a reaction vessel was charged 200 parts of deionized water purged with nitrogen, and further, 1 part of an emulsifier (manufactured by Kao Corporation, trade name: LATEMUL ASK) and 0.15 parts of potassium persulfate were charged. Next, 40 parts of MMA, 2 parts of n-BA and 0.004 parts of n-OM were charged, and the mixture was stirred at 65°C for 3 hours under a nitrogen atmosphere, to complete the polymerization. Subsequently, a monomer component containing 44 parts of MMA and 14 parts of n-BA was dropped over a period of 2 hours, thereafter, the mixture was retained for 2 hours to complete the polymerization, obtaining a polymer latex of a thermoplastic polymer (3).

The polymer latex of the thermoplastic polymer (3) was added into a 0.25% sulfuric acid aqueous solution to coagulate the polymer, it was dehydrated, washed with water and dried, to obtain a powdery thermoplastic polymer (3) (high molecular weight acrylic processing aid). The reduced viscosity of the thermoplastic polymer (3) was 0.38 L/g.

[Preparation Example 4: production of rubber-containing acrylic resin (4)]

Into a reaction vessel equipped with a reflux condenser were charged 300 parts of ion exchanged water, 0.05 parts of sodium carbonate and 0.48 parts of an emulsifier (1), the mixture was heated up to 70°C, and further, a mixture prepared by adding 0.48 parts of sodium formaldehyde sulfoxylate, 0.4 ppm of ferrous sulfate and 1.2 ppm of EDTA to 5 parts of ion exchanged water was put into in a lump. Next, a mixture composed of 84.0 parts of n-BA, 16.0 parts of St, 0.9 parts of AMA, 0.3 parts of t-BH and 1.0 part of the emulsifier (1) was dropped over a period of 185 minutes. Thereafter, the mixture was retained for 120 minutes to perform polymerization of an elastic polymer (4-i).

Subsequently, a mixture prepared by adding 0.12 parts of sodium formaldehyde sulfoxylate to 5 parts of ion exchanged water was put into in a lump, and 15 minutes after, a mixture composed of 58 parts of MMA, 2 parts of MA, 0.25 parts of n-OM, 0.09 parts of t-BH and 0.4 parts of an emulsifier (1) was dropped over a period of 90 minutes, and the mixture was retained for 60 minutes to complete the polymerization of a hard polymer (4-ii), obtaining a latex of a rubber-containing acrylic resin (4).

This latex was coagulated in a magnesium sulfate aqueous solution, washed with pure water in an amount of 20 times of the polymer, dehydrated and dried, to obtain a powder of the rubber-containing acrylic resin (4).

[Preparation Example 5: production of rubber-containing acrylic resin (5)]

Under a nitrogen atmosphere, into a reaction vessel equipped with a reflux condenser was charged 329 parts of deionized water, it was heated up to 80°C, the following mixture (i) was added, and 1/10 of the following mixture (ii) (raw materials of polymer (5-A)) was charged while stirring, and the mixture was retained for 15 minutes. Thereafter, the residual raw materials (iii) were added continuously at an increasing rate of the monomer mixture with respect to water of 8%/hour. Thereafter, the mixture was retained for 1 hour, to obtain a latex of a polymer (5-A).

Subsequently, to this latex was added 0.2 parts of sodium formaldehyde sulfoxylate, the mixture was retained for 15 minutes, and the following raw materials (iii) (raw materials of rubber polymer (5-B)) were added continuously at an increasing rate of the monomer mixture with respect to water of 4%/hour while stirring at 80°C under a nitrogen atmosphere. Thereafter, the mixture was retained for 2 hours, to perform polymerization of a rubber polymer (5-B), obtaining a latex of an elastic polymer ((5-A)+(5-B)).

Subsequently, to this latex was added 0.2 parts of sodium formaldehyde sulfoxylate, the mixture was retained for 15 minutes, and the following raw materials (iv) (raw materials of hard polymer (5-C)) were added continuously at an increasing rate of the monomer mixture with respect to water of 10%/hour while stirring at 80°C under a nitrogen atmosphere. Thereafter, the mixture was retained for 1 hour, to perform polymerization of a hard polymer (5-C), obtaining a latex of a rubber-containing acrylic resin (5). The weight-average particle size of the rubber-containing acrylic resin (5) was 0.28 $\mu$m.

The polymer latex of the rubber-containing acrylic resin (5) was filtrated using a vibrating filtration device equipped with a mesh (average aperture: 150 $\mu$m) made of SUS as a filtering medium, salted out in an aqueous solution containing 3 parts of calcium acetate, recovered by washing with water, and dried, to obtain a powdery rubber-containing acrylic resin (5).

Mixture (i)
| | |
|---|---|
| sodiumformaldehyde sulfoxylate | 0.4 parts |
| ferrous sulfate | 0.00004 parts |
| disodium ethylenediaminetetraacetate | 0.00012 parts |

Mixture (ii)
| | |
|---|---|
| MMA | 18.0 parts |
| n-BA | 20.0 parts |
| St | 2.0 parts |
| AMA | 0.15 parts |
| 1,3-BD | 1.2 parts |
| t-BH | 0.07 parts |
| PHOSPHANOL RS610NA manufactured by Toho Chemical Industry Co., Ltd. | 1.2 parts |

Mixture (iii)
| | |
|---|---|
| BA | 49.5 parts |
| St | 10.5 parts |
| AMA | 1.05 parts |
| 1,3-BD | 0.15 parts |
| CHP | 0.17 parts |
| PHOSPHANOL RS610NA manufactured by Toho Chemical Industry Co., Ltd. | 0.96 parts |

Mixture (iv)
| | |
|---|---|
| MMA | 57.0 parts |
| MA | 3.0 parts |
| nOM | 0.18 parts |
| t-BH | 0.102 parts |

[Example 1]

One hundred parts of the rubber-containing acrylic resin (1), and, 2.1 parts of LA-31 RG (trade name, manufactured by ADEKA Corporation), 0.3 parts of LA-57 (trade name, manufactured by ADEKA Corporation) and 0.1 part of IRGANOX 1076 (trade name, Manufactured by Ciba Specialty Chemicals) as compounding agents, were compounded using a Henschel mixer. This compounded material was melt-kneaded using a degassing extruder (PCM-30 (trade name) manufactured by Ikegai Corporation) under conditions of a cylinder temperature of 200°C to 240°C and a die temperature of 240°C, to obtain pellets. The pellets were fed to a 40$\varphi$ single screw extruder having a cylinder temperature of 220°C to 245°C and an acrylic resin film 1 having a thickness of 50 $\mu$m was obtained under conditions of a T die width of 400 mm, a T die lip-lip distance of 0.5 mm, a T die temperature of 240°C and a take-up speed of 14 m/min.
This acrylic resin film 1 was laminated on the surface of a polycarbonate resin plate, the laminate was overlapped on an embossing die having a surface temperature (processing temperature) of 115°C (arithmetic average roughness Ra: 5 $\mu$m) so that the acrylic resin film came into contact with the die, the surface of the polycarbonate resin plate side was pressed using a roll of 80°C under conditions of a pressure of 0.05 MPa and a speed of 60 cm/min, thereafter, the laminate composed of the acrylic resin film and the polycarbonate resin plate was released from the embossing die, to impart an embossed shape to the acrylic resin film.

[Example 2]

An acrylic resin film 2 was obtained in the same manner as in Example 1, excepting that a resin composition containing 80 parts of the rubber-containing acrylic resin (1) and 20 parts of an acrylic resin (manufactured by Mitsubishi Rayon Co., Ltd., trade name: ACRYPET MF, reduced viscosity 0.051 L/g) was used instead of 100 parts of the rubber-containing acrylic resin (1), and embossing thereof was performed in the same manner.

[Example 3]

An acrylic resin film 3 was obtained in the same manner as in Example 1, excepting that a resin composition containing 80 parts of the rubber-containing acrylic resin (1) and 20 parts of an acrylic resin (manufactured by Mitsubishi Rayon Co., Ltd., trade name: ACRYPET MD, reduced viscosity 0.057 L/g) was used instead of 100 parts of the rubber-containing acrylic resin (1), and embossing thereof was performed in the same manner.

[Example 4]

An acrylic resin film 4 was obtained in the same manner as in Example 1, excepting that 100 parts of the rubber-containing acrylic resin (2) was used instead of 100 parts of the rubber-containing acrylic resin (1), and embossing thereof was performed in the same manner.

[Example 5]

An acrylic resin film 5 was obtained in the same manner as in Example 1, excepting that a resin composition containing 80 parts of the rubber-containing acrylic resin (2) and 20 parts of an acrylic resin (manufactured by Mitsubishi Rayon Co., Ltd., trade name: ACRYPET MF, reduced viscosity 0.051 L/g) was used instead of 100 parts of the rubber-containing acrylic resin (1), and embossing thereof was performed in the same manner.

[Example 6]

An acrylic resin film 6 was obtained in the same manner as in Example 1, excepting that 50 parts of the rubber-containing acrylic resin (4) and 50 parts of an acrylic resin (manufactured by Mitsubishi Rayon Co., Ltd., trade name: ACRYPET MD, reduced viscosity 0.057 L/g) were used instead of 100 parts of the rubber-containing acrylic resin (1), and embossing thereof was performed in the same manner.

[Example 7]

An acrylic resin film 7 was obtained in the same manner as in Example 1, excepting that a resin composition containing 44 parts of the rubber-containing acrylic resin (5) and 56 parts of an acrylic resin (manufactured by Mitsubishi Rayon Co., Ltd., trade name: ACRYPET MD, reduced viscosity 0.057 L/g) was used instead of 100 parts of the rubber-containing acrylic resin (1), and embossing thereof was performed in the same manner.

[Comparative Example 1]

An acrylic resin film C1 was obtained in the same manner as in Example 1, excepting that a composition prepared by compounding 2 parts of the thermoplastic polymer (3) as a high molecular weight acrylic processing aid into 100 parts of the rubber-containing acrylic resin (1) was used instead of 100 parts of the rubber-containing acrylic resin (1), and embossing thereof was performed in the same manner.

[Comparative Example 2]

An acrylic resin film C2 was obtained in the same manner as in Example 2, excepting that 60 parts of the rubber-containing acrylic resin (1) and 40 parts of an acrylic resin (trade name: ACRYPET MF) were used as a resin composition, and embossing thereof was performed in the same manner.
The evaluation results of Examples 1 to 7 and Comparative Examples 1 and 2 described above are shown in Table 1.
[Table 1]

Table 1

| | Ex. 1 | Ex. 2 | Ex. 3 | Ex. 4 | Ex.. 5 | Ex. 6 | Ex. 7 | Com. Ex. 1 | Com. Ex. 2 |
|---|---|---|---|---|---|---|---|---|---|
| Storage modulus (E') (MPa) | 0.24 | 0.22 | 0.25 | 0.24 | 0.24 | 0.25 | 0.26 | 0.37 | 0.24 |

(continued)

| | Ex. 1 | Ex. 2 | Ex. 3 | Ex. 4 | Ex.. 5 | Ex. 6 | Ex. 7 | Com. Ex. 1 | Com. Ex. 2 |
|---|---|---|---|---|---|---|---|---|---|
| Heat distortion temperature $T_D$ (°C) | 75 | 77 | 78 | 75 | 77 | 80 | 84 | 75 | 79 |
| Embossing temperature T (°C) | 115 | 114 | 115 | 115 | 115 | 115 | 115 | 115 | 115 |
| Difference (T-$T_D$) (°C) | 40 | 38 | 37 | 40 | 38 | 35 | 31 | 40 | 36 |
| Elongation at break (%) | 144 | 140 | 112 | 115 | 130 | 151 | 102 | 167 | 55 |
| Embossed shape-imparting property | ○ | ○ | ○ | ○ | ○ | ○ | ○ | × | ○ |
| Die-release property | ○ | ○ | ○ | ○ | ○ | ○ | ○ | × | ○ |
| Heat shrinkage ratio (%) | 10 | 7 | 7 | 9 | 7 | 8 | 10 | 15 | 4 |

As shown in Table 1, Examples 1 to 7 shows excellent results in all evaluation items. In contrast, in Comparative Example 1, the embossed shape-imparting property is poor since the storage modulus (E') of the film is too high. In Comparative Examples 2, the mechanical strength is deficient and the handling property is poor since the elongation at break of the film is too low.

[Comparative Examples 3 to 8]

Embossing was carried out in the same manner as in Example 1, excepting that conditions (film used, embossing temperature) shown in Table 2 were adopted. The evaluation results thereof are shown in Table 2.

[Table 2]

Table 2

| | Com. Ex. 3 | Com. Ex. 4 | Com. Ex. 5 | Com. Ex. 6 | Com. Ex. 7 | Com. Ex. 8 |
|---|---|---|---|---|---|---|
| Film used | 1 | 1 | 5 | 5 | 7 | 7 |
| Heat distortion temperature $T_D$ (°C) | 75 | 75 | 77 | 77 | 84 | 84 |
| Embossing temperature T(°C) | 95 | 130 | 100 | 130 | 105 | 140 |
| Difference (T-$T_D$)(°C) | 20 | 55 | 23 | 53 | 21 | 56 |
| Embossed shape-imparting property | × | ○ | × | ○ | × | ○ |
| Die-release property | ○ | × | ○ | × | ○ | × |
| Heat shrinkage ratio (%) | 10 | 10 | 7 | 7 | 10 | 10 |

As shown in Table 2, Comparative Examples 3, 5 and 7 show a poor embossed shape-imparting property since the difference (T-$T_D$)[°C] between the embossing temperature T and the heat distortion temperature $T_D$ is too small. In Comparative Examples 4, 6 and 8, the die-release property is poor since the difference (T-$T_D$)[°C] is too large.

**Claims**

1. A method for imparting an embossed shape to an acrylic resin film by an embossing die at a temperature T[°C] represented by the following formula (1), wherein the storage modulus (E') under a measurement frequency of 0.1 Hz of the acrylic resin film at the temperature T[°C] is 0.20 to 0.36 Mpa and the elongation at break under the following evaluation method is 100% or more:

$$\text{<Formula (1)>}$$

$$T_D + 25°C \leq T \leq T_D + 50°C$$

$T_D$: heat distortion temperature of acrylic resin film <Evaluation method of elongation at break>
Test specimen: film-form material having a thickness of 50 $\mu$m and a width of 15 mm
Tensile test conditions: initial chuck-to-chuck distance: 50 mm, tensile speed: 500 mm/min. temperature: 23°C.

2. The method according to Claim 1, wherein the acrylic resin film contains a rubber-containing acrylic resin.

3. The method according to Claim 2, wherein the rubber-containing acrylic resin is a rubber-containing multi-stage polymer containing an alkyl acrylate, an alkyl methacrylate and a graft crossing agent as constituent components.

4. The method according to Claim 3, wherein the rubber-containing acrylic resin is a rubber-containing multi-stage polymer obtained by polymerizing an elastic polymer (i) containing an alkyl acrylate having a C1-8 alkyl group and/or an alkyl methacrylate having a C1-4 alkyl group and a graft crossing agent at least as constituent components of the polymer,
and a hard polymer (ii) containing an alkyl methacrylate having a C1-4 alkyl group at least as a constituent component of the polymer, in this order.

5. The method according to Claim 4, wherein the rubber-containing acrylic resin is a rubber-containing multi-stage polymer (I) obtained by polymerizing a first elastic polymer (A) containing an alkyl acrylate having a C1-8 alkyl group and/or an alkyl methacrylate having a C1-4 alkyl group and a graft crossing agent at least as constituent components of the first elastic polymer,
a second elastic polymer (B) containing an alkyl acrylate having a C1-8 alkyl group and a graft crossing agent at least as constituent components of the second elastic polymer,
an intermediate polymer (D) containing an alkyl acrylate having a C1-8 alkyl group and/or an alkyl methacrylate having a C1-4 alkyl group and a graft crossing agent at least as constituent components of the intermediate polymer,
and a hard polymer (C) containing an alkyl methacrylate having a C1-4 alkyl group at least as a constituent component of the hard polymer, in this order.

6. The method according to one of Claims 1 to 5 wherein the acrylic resin film contains a resin composition prepared by adding an acrylic resin containing 50 to 100 wt% of an alkyl methacrylate unit having a C1-4 alkyl group and 0 to 50 wt% of at least one other vinyl monomer copolymerizable therewith in which the reduced viscosity thereof, 0.1 g of the polymer is dissolved in 100 ml of chloroform, and measured at 25°C, is 0.1L/g or less, to the rubber-containing acrylic resin.

7. The method according to one of Claims 1 to 6, wherein the heat distortion temperature To of the acrylic resin film is 70°C or higher.

8. The method according to one of Claims 1 to 7, wherein the heat shrinkage ratio of the acrylic resin film when heated at 100°C for 30 minutes is 0 to 10%.

**Patentansprüche**

1. Verfahren, um einer Acrylharzfolie eine geprägte Form zu verleihen, mittels eines Prägewerkzeugs bei einer durch die folgende Formel (1) wiedergegebenen Temperatur T[°C], wobei der Speichermodul (E') unter einer Messfrequenz von 0,1 Hz der Acrylharzfolie bei der Temperatur T[°C] 0,20 bis 0,36 Mpa beträgt, und die Reißdehnung gemäß dem folgenden Auswerteverfahren 100% oder mehr beträgt:

## \<Formel (1)\>

$$T_D+25°C \leq T \leq T_D+50°C$$

$T_D$: Formbeständigeitstemperatur der Acrylharzfolie
\<Auswerteverfahren der Reißdehnung\>
Probekörper: Folienformmaterial mit einer Dicke von 50 $\mu$m und einer Breite von 15 mm
Zugversuchsbedingungen: anfänglicher Abstand von Spannfutter-zu-Spannfutter: 50 mm, Zuggeschwindigkeit: 500 mm/min, Temperatur: 23°C.

2. Verfahren nach Anspruch 1, wobei die Acrylharzfolie ein kautschukhaltiges Acrylharz enthält.

3. Verfahren nach Anspruch 2, wobei das kautschukhaltige Acrylharz ein kautschukhaltiges Mehrstufenpolymer ist, enthaltend ein Alkylacrylat, ein Alkylmethacrylat und ein Pfropf-Vernetzungsmittel als Aufbaukomponenten.

4. Verfahren nach Anspruch 3, wobei das kautschukhaltige Acrylharz ein kautschukhaltiges Mehrstufenpolymer ist, erhalten durch Polymerisieren eines elastischen Polymeren (i) enthaltend ein Alkylacrylat mit einer C1-8-Alkylgruppe und/oder ein Alkylmethacrylat mit einer C1-4-Alkylgruppe und ein Pfropf-Vernetzungsmittel mindestens als Aufbaukomponenten des Polymeren,
und eines harten Polymeren (ii) enthaltend ein Alkylmethacrylat mit einer C1-4-Alkylgruppe mindestens als eine Aufbaukomponente des Polymeren, in dieser Reihenfolge.

5. Verfahren nach Anspruch 4, wobei das kautschukhaltige Acrylharz ein kautschukhaltiges Mehrstufenpolymer (I) ist, erhalten durch Polymerisieren eines ersten elastischen Polymeren (A) enthaltend ein Alkylacrylat mit einer C1-8-Alkylgruppe und/oder ein Alkylmethacrylat mit einer C1-4-Alkylgruppe und ein Pfropf-Vernetzungsmittel mindestens als Aufbaukomponenten des ersten elastischen Polymeren,
eines zweiten elastischen Polymeren (B) enthaltend ein Alkylacrylat mit einer C1-8-Alkylgruppe und ein Pfropf-Vernetzungsmittel mindestens als Aufbaukomponenten des zweiten elastischen Polymeren,
eines Zwischenpolymeren (D) enthaltend ein Alkylacrylat mit einer C1-8-Alkylgruppe und/oder ein Alkylmethacrylat mit einer C1-4-Alkylgruppe und ein Pfropf-Vernetzungsmittel mindestens als Aufbaukomponenten des Zwischenpolymeren,
und eines harten Polymeren (C) enthaltend ein Alkylmethacrylat mit einer C1-4-Alkylgruppe mindestens als eine Aufbaukomponente des harten Polymeren, in dieser Reihenfolge.

6. Verfahren nach einem der Ansprüche 1 bis 5, wobei die Acrylharzfolie eine Harzzusammensetzung enthält, hergestellt durch Zugeben eines Acrylharzes, enthaltend 50 bis 100 Gew.-% einer Alkylmethacrylateinheit mit einer C1-4-Alkylgruppe und 0 bis 50 Gew.-% mindestens eines anderen damit copolymerisierbaren Vinylmonomeren, wobei die reduzierte Viskosität hiervon, 0,1 g des Polymeren werden in 100 ml Chloroform gelöst und bei 25°C gemessen, 0,1 L/g oder weniger beträgt, zu dem kautschukhaltigen Acrylharz.

7. Verfahren nach einem der Ansprüche 1 bis 6, wobei die Formbeständigkeitstemperatur $T_D$ der Acrylharzfolie 70°C oder höher ist.

8. Verfahren nach einem der Ansprüche 1 bis 7, wobei das Wärmeschrumpfungsverhältnis der Acrylharzfolie bei Erwärmung auf 100°C während 30 Minuten 0 bis 10% beträgt.


**Revendications**

1. Procédé pour conférer un relief sur un film de résine acrylique au moyen d'un outil de gaufrage à une température T[°C] représentée par la formule (1) suivante, dans lequel le module de conservation (E') à une fréquence de mesure de 0,1 Hz du film de résine acrylique à la température T[°C] est de 0,20 à 0,36 Mpa et l'élongation à la rupture dans la méthode d'évaluation suivante est supérieure ou égale à 100 % :

## Formule (1)

$$T_D + 25\ °C \leq T \leq T_D + 50\ °C$$

$T_D$: température de déformation à la chaleur du film de résine acrylique Méthode d'évaluation de l'élongation à la rupture

Échantillon à tester : matériau de type film ayant une épaisseur de 50 $\mu$m et une largeur de 15 mm

Conditions d'essai de traction : distance initiale entre les mâchoires : 50 mm, vitesse de traction : 500 mm/min, température : 23 °C.

2. Procédé selon la revendication 1, dans lequel le film de résine acrylique contient une résine acrylique contenant du caoutchouc.

3. Procédé selon la revendication 2, dans lequel la résine acrylique contenant du caoutchouc est un polymère stratifié contenant du caoutchouc contenant un acrylate d'alkyle, un méthacrylate d'alkyle et un agent de réticulation de greffage comme composants principaux.

4. Procédé selon la revendication 3, dans lequel la résine acrylique contenant du caoutchouc est un polymère stratifié contenant du caoutchouc obtenu par polymérisation d'un polymère élastique (i) contenant au moins un acrylate d'alkyle ayant un groupe alkyle en $C_1$ à $C_8$ et/ou un méthacrylate d'alkyle ayant un groupe alkyle en $C_1$ à $C_4$ et un agent de réticulation de greffage comme composants constitutionnels du polymère, et d'un polymère dur (ii) contenant au moins un méthacrylate d'alkyle ayant un groupe alkyle en $C_1$ à $C_4$ comme composant constitutionnel principal, dans cet ordre.

5. Procédé selon la revendication 4, dans lequel la résine acrylique contenant du caoutchouc est un polymère stratifié contenant du caoutchouc (I) obtenu par polymérisation d'un premier polymère élastique (A) contenant au moins un acrylate d'alkyle ayant un groupe alkyle en $C_1$ à $C_8$ et/ou un méthacrylate d'alkyle ayant un groupe alkyle en $C_1$ à $C_4$ et un agent de réticulation de greffage comme composants constitutionnels du premier polymère élastique, d'un second polymère élastique (B) contenant au moins un acrylate d'alkyle ayant un groupe alkyle en $C_1$ à $C_8$ et un agent de réticulation de greffage comme composants constitutionnels du second polymère élastique, d'un polymère intermédiaire (D) contenant au moins un acrylate d'alkyle ayant un groupe alkyle en $C_1$ à $C_8$ et/ou un méthacrylate d'alkyle ayant un groupe alkyle en $C_1$ à $C_4$ et un agent de réticulation de greffage comme composants constitutionnels du polymère intermédiaire, et d'un polymère dur (C) contenant au moins un méthacrylate d'alkyle ayant un groupe alkyle en $C_1$ à $C_4$ et un agent de réticulation de greffage comme composants constitutionnels du polymère dur, dans cet ordre.

6. Procédé selon l'une quelconque des revendications 1 à 5, dans lequel le film de résine acrylique contient une composition de résine préparée par ajout d'une résine acrylique contenant de 50 à 100 % en poids d'un motif de méthacrylate d'alkyle ayant un groupe alkyle en $C_1$ à $C_4$ et de 0 à 50 % en poids d'au moins un autre monomère vinylique copolymérisable avec le motif, dont la viscosité réduite, 0,1 g du polymère étant dissous dans 100 ml de chloroforme, et mesurée à 25°C, est inférieure ou égale à 0,1 l/g, à la résine acrylique contenant du caoutchouc.

7. Procédé selon l'une quelconque des revendications 1 à 6, dans lequel la température de déformation à la chaleur $T_D$ du film de résine acrylique est supérieure ou égale à 70 °C.

8. Procédé selon l'une quelconque des revendications 1 à 7, dans lequel le rapport de rétrécissement à la chaleur du film de résine acrylique lorsqu'il est chauffé à 100 °C pendant 30 minutes est de 0 à 10 %.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005163003 A
- WO 2009142048 A
- US 20110052873 A
- JP 52056150 A
- JP 57140161 A
- JP 58215444 A
- JP 9263614 A
- JP 11228710 A
- JP 2003128735 A

- JP 2003211446 A
- JP 2004002665 A
- JP 2006249198 A
- JP 2006110744 A
- JP 2006091847 A
- JP 2007091784 A
- JP 2007178514 A
- JP 2005139416 A